# EUROPEAN PATENT SPECIFICATION

(11) **EP 0 836 150 B1**
(45) Date of publication and mention of the grant of the patent: **09.01.2002**
(21) Application number: 96116230.2
(22) Date of filing: 10.10.1996
(51) Int. Cl.: G06K 11/08, G06F 3/023

(54) **Remote activation system for controlling a cursor**
Fernaktivierungssystem zur Steuerung eines Cursors
Système d'activation télécommandée pour commander un curseur

(43) Date of publication of application: 15.04.1998
(73) Proprietor: Majed, El Marri Saqr, 1209 Geneva (CH)
(72) Inventor: Majed, El Marri Saqr, 1209 Geneva (CH)
(74) Representative: Kügele, Bernhard

(56) References cited:
- WO-A-96/12248
- US-A- 4 182 956
- US-A- 4 713 535
- PATENT ABSTRACTS OF JAPAN vol. 012, no. 192 (P-712), 4 June 1988 & JP 62 298822 A (MATSUSHITA ELECTRIC IND CO LTD), 25 December 1987,
- PATENT ABSTRACTS OF JAPAN vol. 013, no. 406 (P-930), 8 September 1989 & JP 01 147617 A (NEC CORP), 9 June 1989,
- PATENT ABSTRACTS OF JAPAN vol. 018, no. 441 (P-1788), 17 August 1994 & JP 06 139007 A (NITSUKO CORP), 20 May 1994,
- PATENT ABSTRACTS OF JAPAN vol. 016, no. 193 (P-1349), 11 May 1992 & JP 04 025924 A (DIGITAL SUTORIIMU:KK), 29 January 1992,

## Description

The present invention relates to a computer keyboard remote activation system including a keyboard, a mouse and a contact-less activation means for activating keys of the keyboard.

More particularly, the present invention relates to a computer handling aid for disabled persons who can not move their hands and fingers nor their feet in order to effectively operate a computer keyboard. Other applications of the remote activation system of the present invention are envisaged and briefly described.

Document US-A-4 713 535 already shows a remote activation system comprising a light source for producing a light beam and at least one light receiving element on the keyboard, whereby the light source is a constant light source and the light receiving element is designed thus as to trigger activation of an operation of said keyboard when the light receiving device receives light for at least a predetermined period of time.

This computer system has a processing unit, a keyboard and a screen, and it further comprises a light source for producing a light beam, at least some of the keys of the keyboard being provided with a light receiving device destined to receive the light beam of the light source, said light receiving devices being connected to an electronic circuit in the keyboard producing electrical signals for the processing unit corresponding to an activation of a key.

A similar system is known from JP-A-01 147 617.

Thus, the handling aid for the computer according to this document obviates the necessity of physically touching any key of the keyboard in order to input instructions to the computer, the mechanical pressing of a key being replaced by the impact of a light beam on a key of the keyboard, which is acknowledged by the light receiving device in each key.

The document WO-A-96 12248 describes a position sensing of a remote target and may be used in relation to a contacless operation of a computer mouse by moving the mouse indicator on a computer screen through light signals emitted from a pointing device arranged on a user's head and directed to mouse indicator moving means. According to a preferred embodiment of the present invention, the light source may be a laser source, whereas the light beam is a laser beam and the light receiving device may be a charge coupled device which has a selective sensitivity for the frequency of the laser beam.

Thus, any environmental light which falls arbitrarily on the keys of the keyboard would not trigger a false input.

According to a particularly advantageous embodiment, the laser source can be attached to a headrest, whereas the disabled operator of the computer may direct the laser beam selectively onto any of the desired keys by a simple movement of his head.

Thus, the laser source can be received within a pencil-like cylindrical housing which includes optical focusing means for forming and directing a laser beam into a direction coaxial with the longitudinal axis of the cylindrical housing.

According to a further embodiment of the present invention, the keyboard may be arranged above or below said display screen in an orientation thus that the plane formed by the keys of the keyboard is essentially parallel to the plane of the display screen.

In order to advantageously arrange the light receiving devices on the keyboard, each of the keys may include a preferentially central hole in its character-carrying surface which holes are provided to permit the passing of the laser beam to said light receiving devices which are arranged each within a key, said light receiving devices being connected to said electronic circuit in a manner as to produce an activation signal simulating the pressing of a key upon incidence of the laser beam onto said light receiving device.

In a further embodiment, the computer system of the present invention comprises a laser sensitive mouse having a front surface on which are arranged at least four light receiving devices, said front surface being arranged in a plane essentially parallel to the plane of the keys of the keyboard and facing the operator.

Said mouse may further comprise two polarity sensitive DC motors connected to one of two polarity selective electronic circuits respectively, whereof each two of said light receiving devices are respectively located in one of said polarity selective electronic circuits, two of said light receiving devices are connected to each one of said two DC motors in a manner as to drive said motors in one or the other direction in response to an incidence of said laser beam on one or the other light receiving device such that electrical signals are produced in response to the movement of said motors, simulating the up-down-left-right movement of a mouse.

Further, said mouse may comprise a fifth light receiving device providing for the validation of a selection operated by the simulated movement of the mouse.

In a particularly preferred embodiment of the invention, each one of said four light receiving devices of the mouse is connected between collector and base of one of four transistors respectively, the emitters of which are connected two to the positive pole and the two others to the negative pole of a battery device, thus forming two polarity selective circuits. A first terminal of each DC motor is connected to a point common to the collectors of the two transistors of each polarity selective circuit respectively and second terminals of the DC motors are both connected to a 0 potential of the battery device, whereby irradiation of each one of said four light receiving devices by the laser beam opens the corresponding transistor so that the respective first terminal of the DC motor, which is connected to the collector of the transistor to which said irradiated light receiving device is connected, is drawn to the potential of either the positive or the negative side of the battery device depending on which one of the two light receiving devices, connected to the transistors in the considered polarity selective circuit, is irradiated.

In the following the invention will be described in more detail with reference to the drawings, whereof
Figure 1 represents a global illustration of the present invention,
Figure 2 represents a schematic cross-section through a pointer including a laser source,
Figure 3 illustrates a mouse for the use with the present invention and,
Figure 4 is an electrical diagram of a portion of the mouse according to figure 3.

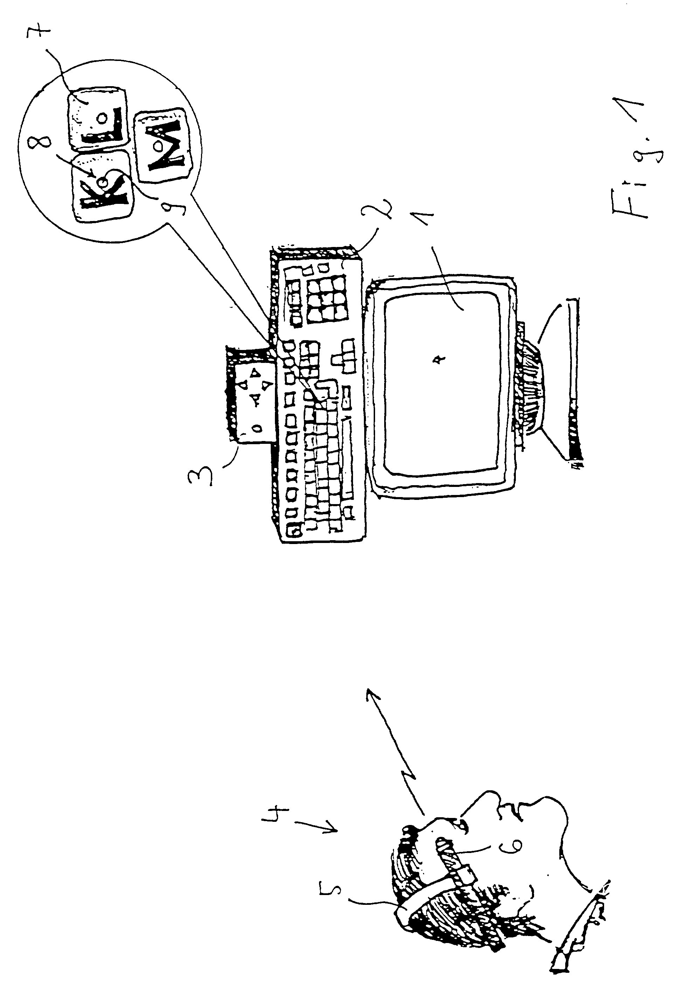

In figure 1, there is indicated the display screen 1 of a computer, the processing unit of which is not illustrated as of no particular interest for the present invention.

Above the display screen 1 there is arranged a keyboard 2 in an orientation thus, that its main surface, i.e. the surface carrying the individual keys 7 is positioned in vertical orientation, essentially parallel to the plane of the display screen 1.

Above the keyboard 2 there is a unit 3 which, as will be described herein below assumes the functions of a mouse.

The operator 4 of the computer carries a headrest 5 on which a laser pointer 6 is arranged such that its longitudinal axis is oriented in the straight forward viewing direction of operator 4.

As illustrated in an enlarged detail of the keyboard, at least some, preferentially all of the keys of the keyboard, include central openings 8, behind which are arranged laser sensitive charge coupled devices 9 which selectively receive the light from the laser pointer 6 in order to simulate the physical depression of a key through the reception of the laser beam which is directed by the operator onto anyone of the desired keys by simple movement of his head.

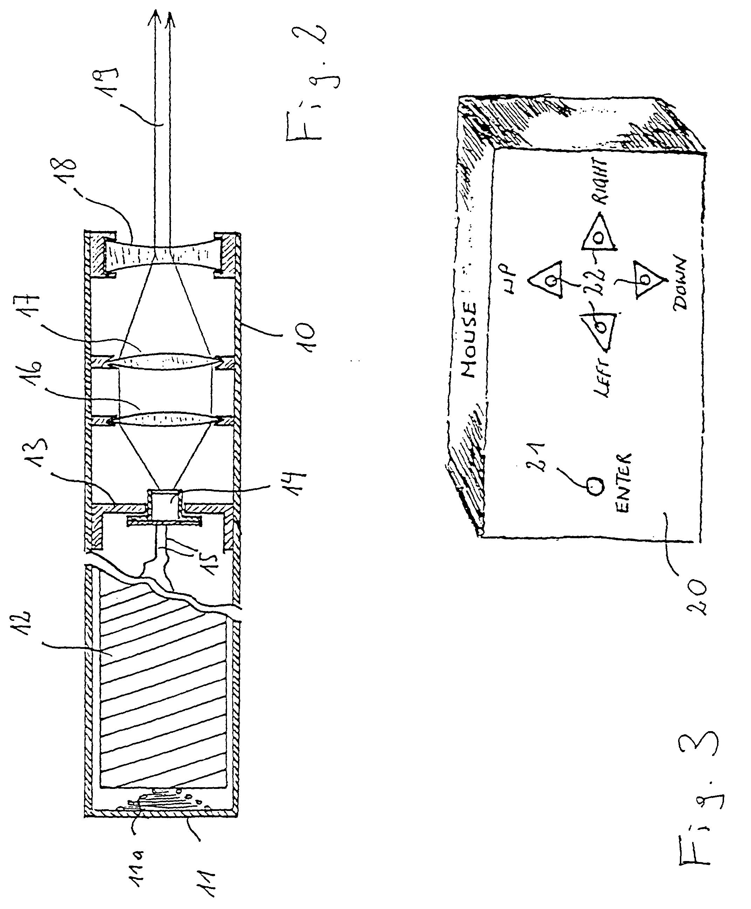

Figure 2 illustrates schematically the laser pointer of figure 1, whereby a cylindrical housing 10 receives a battery 12, the negative pole of which is pressed against a conical spring 11a which is fixed onto the rear wall 11 of the cylindrical housing 10.

At its front end, the cylindrical housing 10 comprises a pot-like insert 13 which may be kept in place by means of any known process such as threading, press fitting, etc.

The disc portion of this insert 13 has an axial hole into which is fitted a laser diode 14, whose terminals 15 are connected to a not shown electrical supply circuit which is fed by battery 12.

Laser light exits from the front glass plate of the laser diode in diverging directions towards first convex lens 16 by which the diverging light beam is made parallel, and in this parallel configuration the laser beam falls on the second convex lens 17 by which it is transformed into a convergent beam which is directed onto a concave lens 18, from which it exits as parallel beam 19 of largely reduced cross sectional diameter.

This laser beam 19 is directed selectively to anyone of the holes in the keys of the keyboard of figure 1 by a corresponding movement of the operator's head. The laser beam may be directed by the operator thus as to pass between the holes of the keys when scanning over the keyboard before it is directed onto the appropriate key and will be maintained a short predetermined minimum time, in order to activate this particular key. Since the spot of the laser beam on the device is visible, the beam may easily be directed, by slight movements of the operator's head, to the desired location.

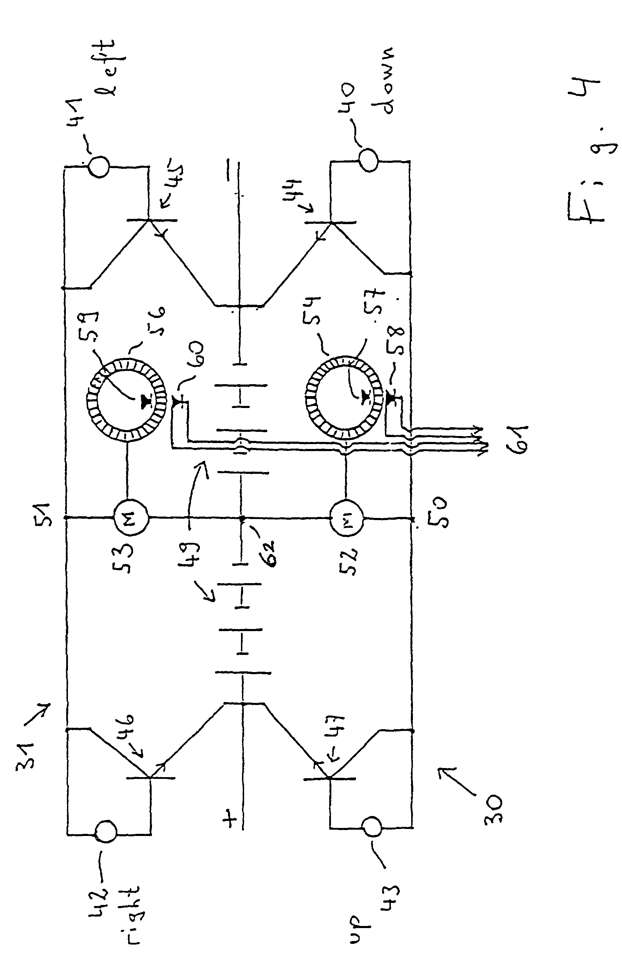

In addition to the activation of any of the desired keys of the keyboard, the operator may likewise use a specially designed mouse indicated with reference 3 in figure 1 and more particularly described in figures 3 and 4 herein below.

Figure 3 shows the mouse for use in the present invention having a basic rectangular shape and including at its front surface 20, which faces the operator, four light receiving devices 22, each one for up, down, left or right movement respectively, as well as a fifth light receiving element 21 which represents the click-button on a conventional mouse.

Thus, by directing the laser beam to anyone of the light receiving devices 21 or 22 on front surface 20 of the mouse, the operator may use the practical mouse function of his computer terminal which considerably facilitates the operation of the computer compared with a conventional input of instructions through the keys only.

Turning now to figure 4, a portion of the electronic circuit of the mouse according to figure 3 comprises a stack of batteries 49 as well as two polarity selective circuits 30 and 31 which will be described in more detail further below. Each of those polarity selective circuits is designed as to drive one or the other of two DC motors 52 and 53 in either direction according to the incidence of laser light onto one of the four light receiving devices 40, 41, 42 or 43.

Each of those light receiving devices is connected between the collector and the base of one of four transistors 44, 45, 46 and 47, whereby the emitters of transistors 46 and 47 are connected to the positive side of the battery pack 49 and the emitters of transistors 44 and 45 are connected to the negative side of the battery pack 49.

Each of the DC motors 52 and 53 comprises first terminals which are connected to a point 50 or 51 respectively, which point is also connected to the collectors of each two transistors 44, 47 and 45, 46 respectively.

The DC motors 52 and 53 also comprise second terminals which are both connected to the same point 62 which represents a neutral potential between the positive and negative potentials of the battery pack 49.

Upon the incidence of laser light onto any one of the four light receiving devices 40 to 43, the transistor connected to the considered light receiving device will open and the potential on either point 50 or point 51, depending on whichever light receiving device is irradiated, will be drawn either to the positive or the negative potential of the battery pack in response to the opening of one of the transistors 44 to 47.

As soon as the potential of one of the points 50 or 51 is drawn to plus or to minus, the motor 52 or 53 between neutral point 62 and point 50 or point 51 respectively will begin to rotate in one or the other direction in response to which of the potentials, negative or positive appears on point 50 or 51.

Each motor 52 or 53 is mechanically connected to a perforated wheel 54 or 56 respectively, and these wheels are arranged each between a light emitting diode 57, 59 and a light receiving diode 58, 60 whereas rotation of the wheels 54, 56 create light pulses which are transformed in diode 58 and 60 into electrical signals which are fed to the computer at 61.

Thus, irradiation of one of the light receiving devices 40 to 43 creates an appropriate movement of one of the two perforated wheels 54, 56 and simulates the typical movement of a mouse on a mouse pad.

The remote activation system of the present invention may also be used by not disabled persons who, for any reasons, wish to keep their hands free during operation.

## Claims

1. A computer keyboard remote activation system for operating a computer keyboard (2), comprising a laser source (6) for producing a laser beam (19) and at least one light receiving element (9) on the keyboard, whereby the laser source is a constant laser source and the light receiving element (9) is designed thus as to trigger activation of an operation of said keyboard when the light receiving element (9) receives light for at least a predetermined period of time,
**characterised in that** the system further comprises a laser sensitive mouse (3) having a front surface (20) on which are arranged at least four laser-light receiving devices (22; 40 - 43), said front surface (20) being arranged in a plane essentially parallel to the plane of the keys of the keyboard (2) and facing the operator (4), and **in that**
said mouse (3) further includes two polarity sensitive DC motors (52, 53) connected to one of two polarity selective electronic circuits (30, 31) respectively, whereof each two of said laser-light receiving devices (40, 43 and 41, 42) are respectively located in one of said polarity selective electronic circuits (30, 31), two of said laser-light receiving devices (40, 43; 41, 42) are connected to each one of said two DC motors in a manner as to drive said motors in one or the other direction in response to an incidence of said laser beam (19) on one or the other laser-light receiving device (40 or 43; 41 or 42), such that electrical signals are produced in response to the movements of said motors, thereby simulating the up-down-left-right movements of a mouse.

2. The computer system of claim 1, **characterised in that** said mouse (3) further includes a fifth laser-light receiving device (21) provided for the validation of a selection operated by the simulated movement of the mouse.

3. The computer system of claim 1 or 2, **characterised in that** each one of said at least four laser-light receiving devices (40 to 43) of the mouse (3) is connected between collector and base of one of four transistors (44 to 47) respectively, the emitters of which are connected two to the positive pole (+) and the two others to the negative pole (-) of a battery device (49), thus forming two polarity selective circuits (30, 31), **in that** a first terminal of each DC motor (52, 53) in connected to a point (50, 51) common to the collectors of the two transistors of each polarity selective circuit (30, 31) respectively, and **in that** second terminals of the DC motors are connected to a 0 potential of the battery device (49), depending on which one of the two laser-light receiving devices, connected to the transistors in the considered polarity selective circuit, is irradiated.

4. The system of any one of claims 1 to 3, **characterised in that** said light receiving element (9) is a charge coupled device which has a selective sensitivity for the frequency of the laser beam (19).

5. The system of claim 4, **characterised in that** said laser source (6) is attached to a headrest (5).

6. The system of claim 4 or 5, **characterised in that** the laser source is received in a pencil-like cylindrical housing (10) including optical focusing means (16, 17, 18) for forming and directing the laser beam (19) into a direction coaxial with the longitudinal axis of the cylindrical housing (10).

7. The computer system of any of claims 1 to 6, **characterised in that** said keyboard (2) is arranged above or below said display screen (1) in an orientation such that the plane formed by the keys (7) of the keyboard (2) is essentially parallel to the plane of the display screen (1).

## Patentansprüche

1. Fernaktivierungssystem für eine Computertastatur zum Betätigen einer Computertastatur (2), das eine Laserquelle (6) zum Erzeugen eines Laserstrahls (19) und mindestens ein Lichtempfangselement (9) auf der Tastatur aufweist, wobei die Laserquelle eine konstante Laserquelle ist und das Lichtempfangselement (9) so ausgelegt ist, dass die Betätigung der Tastatur ausgelöst wird, wenn das Lichtempfangselement (9) mindestens eine bestimmte Zeit lang Licht empfängt,
**dadurch gekennzeichnet, dass** das System außerdem eine laserempfindliche Maus (3) mit einer Vorderseite (20) aufweist, auf der mindestens vier Laserlichtempfangsanordnungen (22, 40 - 43) angeordnet sind, wobei die Vorderseite (20) in einer Ebene angeordnet ist, die im wesentlichen parallel zur Ebene der Tasten der Tastatur (2) ist und dem Bediener (4) zugekehrt ist; und dass
die Maus (3) außerdem zwei polaritätsempfindliche Gleichstrommotoren (52, 53) aufweist, die jeweils mit einer von zwei polaritätsselektiven Schaltungen (30, 31) verbunden sind, wobei sich jeweils zwei der Laserlichtempfangsanordnungen (40, 43 und 41, 42) in einer der polaritätsselektiven elektronischen Schaltungen (30, 31) befinden und zwei der Laserlichtempfangsanordnungen (40, 43; 41, 42) so mit jeweils einem der beiden Gleichstrommotoren verbunden sind, dass sie diese Motoren in der einen oder der anderen Richtung in Reaktion auf das Auftreffen des Laserstrahls (19) auf der einen oder der anderen Laserlichtempfangsanordnung (40 oder 43; 41 oder 42) antreiben, sodass in Reaktion auf die Bewegungen der Motoren elektrische Signale erzeugt werden, wodurch die Bewegungen einer Maus nach oben, unten, links und rechts simuliert werden.

2. Fernaktivierungssystem nach Anspruch 1, **dadurch gekennzeichnet, dass** die Maus (3) außerdem eine fünfte Laserlichtempfangsanordnung (21) aufweist, die zum Bestätigen einer mit der simulierten Bewegung der Maus vorgenommenen Wahl vorgesehen ist.

3. Fernaktivierungssystem nach Anspruch 1 oder 2, **dadurch gekennzeichnet, dass** jede der mindestens vier Laserlichtempfangsanordnungen (40 bis 43) der Maus (3) jeweils zwischen Kollektor und Basis eines von vier Transistoren (44 bis 47) geschaltet ist, wobei zwei seiner Emitter mit dem Pluspol (+) und die beiden anderen mit dem Minuspol (-) einer Batterie-Anordnung (49) verbunden sind, sodass zwei polaritätsselektive Schaltungen (30, 31) entstehen; dass eine erste Klemme jedes Gleichstrommotors (52, 53) mit einem Verbindungspunkt (50, 51) verbunden ist, den die Kollektoren der zwei Transistoren jeder polaritätsselektiven Schaltung (30, 31) gemeinsam haben; und dass in Abhängigkeit davon, welche der beiden Laserlichtempfangsanordnungen, die mit den Transistoren in der betreffenden polaritätsselektiven Schaltung verbunden sind, bestrahlt wird, zweite Klemmen der Gleichstrommotoren mit einem Nullpotential der Batterie-Anordnung (49) verbunden werden.

4. Fernaktivierungssystem nach einem der Ansprüche 1 bis 3, **dadurch gekennzeichnet, dass** das Lichtempfangselement (9) ein Ladungsspeicherbaustein mit einer selektiven Empfindlichkeit für die Frequenz des Laserstrahls (19) ist.

5. Fernaktivierungssystem nach Anspruch 4, **dadurch gekennzeichnet, dass** die Laserquelle (6) an einem Kopfbügel (5) befestigt ist.

6. Fernaktivierungssystem nach Anspruch 4 oder 5, **dadurch gekennzeichnet, dass** die Laserquelle in einem stiftförmigen zylindrischen Gehäuse (10) mit optischen Fokussierungsmitteln (16, 17, 18) zum Erzeugen des Laserstrahls (19) und zum Richten des Laserstrahls (19) in eine Richtung koaxial mit der Längsachse des zylindrischen Gehäuses (10) untergebracht ist.

7. Fernaktivierungssystem nach einem der Ansprüche 1 bis 6, **dadurch gekennzeichnet, dass** die Tastatur (2) über oder unter dem Bildschirm (1) angeordnet und so ausgerichtet ist, dass die von den Tasten (7) der Tastatur (2) gebildete Ebene im wesentlichen parallel zur Ebene des Bildschirms (1) ist.

## Revendications

1. Système d'activation à distance de clavier d'ordinateur pour exploitation d'un clavier (2) d'ordinateur, comprenant une source laser (6) destinée à produire un faisceau laser (19) et au moins un élément récepteur de lumière (9) sur le clavier, dans lequel la source laser est une source laser constante et l'élément récepteur de lumière (9) est conçu de façon à déclencher l'activation d'une opération dudit clavier lorsque l'élément récepteur de lumière (9) reçoit la lumière pendant au moins une période de temps prédéterminée,
**caractérisé en ce que** le système comprend en outre une souris (3) sensible au laser présentant une surface avant (20) sur laquelle sont disposés au moins quatre dispositifs récepteurs de lumière (22 ; 40 à 43), ladite surface avant (20) étant disposée dans un plan sensiblement parallèle au plan des touches du clavier (2) et faisant face à l'opérateur (4), et **en ce que**
ladite souris (3) comprend en plus deux moteurs à courant continu sensibles à la polarité (52, 53) connectés à un parmi deux circuits électroniques de sélection de la polarité (30, 31) respectivement, dans lequel chaque paire desdits dispositifs récepteurs de lumière laser (40, 43 et 41, 42) est respectivement située dans un desdits circuits électroniques de sélection de la polarité (30, 31), deux desdits dispositifs récepteurs de lumière laser (40, 43 ; 41, 42) sont connectés à chacun desdits deux moteurs à courant continu de manière à piloter lesdits moteurs dans l'un ou l'autre sens en réponse à une incidence dudit faisceau laser (40 ou 43 ; 41 ou 42), de telle façon que des signaux électriques sont produits en réponse aux mouvements desdits moteurs, ce qui a pour effet de simuler les mouvements haut-bas-gauche-droite d'une souris.

2. Système informatique selon la revendication 1, **caractérisé en ce que** ladite souris (3) comprend de plus un cinquième dispositif récepteur de lumière laser (21) prévu pour la validation d'une sélection opérée par le mouvement simulé de la souris.

3. Système informatique selon la revendication 1 ou 2, **caractérisé en ce que** chacun desdits au moins quatre dispositifs récepteurs de lumière laser (40 à 43) de la souris (3) est connecté entre le collecteur et la base d'un parmi quatre transistors (44 à 47) respectivement, dont les émetteurs sont connectés, deux au pôle positif (+) et les deux autres au pôle négatif (-) d'un dispositif de batterie (49), formant ainsi deux circuits de sélection de la polarité (30, 31), **en ce qu'**une première borne de chaque moteur à courant continu (52, 53) est connectée à un point (50, 51) commun aux collecteurs des deux transistors de chaque circuit de sélection de la polarité (30, 31) respectivement, et **en ce que** les deuxièmes bornes des moteurs à courant continu sont connectées à un potentiel 0 du dispositif de batterie (49), en fonction de celui des deux dispositifs récepteurs de lumière laser, connectes aux transistors dans le circuit de sélection de la polarité considéré, qui est éclairé.

4. Système selon l'une quelconque des revendications 1 à 3, **caractérisé en ce que** ledit élément récepteur de lumière (9) est un dispositif à couplage de charges qui possède une sensibilité sélective à la fréquence du faisceau laser (19).

5. Système selon la revendication 4, **caractérisé en ce que** ladite source laser (6) est fixée à un appui-tête (5).

6. Système selon la revendication 4 ou 5, **caractérisé en ce que** la source laser est reçue dans un boîtier cylindrique (10) semblable à un crayon comprenant des moyens de focalisation optique (16, 17, 18) afin de former et de diriger le faisceau laser (19) dans une direction coaxiale avec l'axe longitudinal du boîtier cylindrique (10).

7. Système selon l'une quelconque des revendications 1 à 6, **caractérisé en ce que** ledit clavier (2) est disposé au-dessus ou au-dessous dudit écran d'affichage (1) selon une orientation telle que le plan formé par les touches (7) du clavier (2) est sensiblement parallèle au plan de l'écran d'affichage (1).
